Europäisches Patentamt

European Patent Office

Office européen des brevets

(11) Numéro de publication: **0 338 955**

**A1**

## (12) DEMANDE DE BREVET EUROPEEN

(21) Numéro de dépôt: 89430009.4

(22) Date de dépôt: 20.04.89

(51) Int. Cl.⁴: **B 63 B 3/13**
    B 29 C 67/00

(30) Priorité: 22.04.88 FR 8805568

(43) Date de publication de la demande:
    **25.10.89 Bulletin 89/43**

(84) Etats contractants désignés:
    **BE CH DE ES FR GB GR IT LI NL SE**

(71) Demandeur: **TECHNOLOGIES SPECIALES INGENIERIE
- T.S.I. Société à Responsabilité Limitée dite:
247, Boulevard Cunéo
F-83000 Toulon (FR)**

**ELECTRICITE DE FRANCE Service National
2, rue Louis Murat
F-75008 Paris (FR)**

(72) Inventeur: **Martin, André
247, Boulevard Cunéo
F-83000 Toulon (FR)**

**Luong, Minh Phong
1, rue Bel Air
F-91270 Vigneux-s/Seine (FR)**

**Margis, Georges
5 bis, rue Thérouanne
F-94370 Sucy-en-Brie (FR)**

(74) Mandataire: **Moretti, René et al
C/O Cabinet BEAU DE LOMENIE 14, rue Raphael
F-13008 Marseille (FR)**

(54) Procédé de fabrication d'un flotteur déformable et flotteur obtenu par ledit procédé destiné à l'allègement d'un corps pesant immergé.

(57) La présente invention a pour objet un procédé de fabrication d'un flotteur déformable destiné à l'allègement d'un corps pesant immergé, se caractérisant par les opérations suivantes :
- on réalise au moins une structure tridimensionnelle déformable;
- on remplit les espaces existant entre les composants de ladite structure d'une pluralité de corps creux rigides (4) de forme ronde et remplis d'air;
- et on entoure ladite structure et lesdits corps creux rigides par une peau de revêtement imperméable et souple et capable de subir de forts allongements, de manière à constituer un élément de flotteur parfaitement étanche et susceptible de constituer lui-même un flotteur, ou d'entrer dans la composition dudit flotteur.

Fig.1

EP 0 338 955 A1

## Description

## Procédé de fabrication d'un flotteur déformable et flotteur obtenu par ledit procédé destiné à l'allègement d'un corps pesant immergé.

La présente invention a pour objet un procédé de fabrication d'un flotteur déformable et un flotteur obtenu par ledit procédé destiné à l'allègement d'un corps pesant immergé.

Le secteur technique de l'invention est celui des appareillages adaptés pour alléger ou maintenir en état de flottabilité des corps pesants immergés tels que des câbles, tuyaux, caissons ou autres appareils ou objets trouvant leur application dans le milieu aquatique ou dans des piscines de centrales nucléaires notamment.

Les contraintes hydrostatiques à grande profondeur dans le milieu marin sont importantes.

Réaliser une structure susceptible de conserver ces caractéristiques de flottabilité en dépit de la pression ambiante dont l'effet se traduit en général par une diminution du volume du corps immergé reste un problème complexe surtout lorsque ce flotteur doit rester souple.

On connaît déjà des structures rigides bien dimensionnées qui permettent de résister à la pression. Les allègements de ces structures en immersion, par grands fonds, imposent la mise en oeuvre de différents moyens.

Selon un moyen connu, on alourdit le flotteur en vue de son immersion à l'aide d'une ou plusieurs chaînes qui, au contact du sol, allègent le flotteur au fur et à mesure de son contact avec le fond marin. La remontée du flotteur est obtenue en dissociant la ou les chaînes dudit flotteur.

Une application de tels moyens est faite sur les bathiscaphes.

Selon un autre moyen connu, on remplit les réservoirs prévus à cet effet, d'un fluide dont la densité est inférieure à l'eau.

Selon encore un autre moyen connu, on utilise des corps rigides très résistants d'une densité inférieure à celle du milieu ambiant.

Pour obtenir leur immersion, ces corps sont alourdis et en vue de leur récupération, ils sont libérés du lest destiné à leur immersion.

Parmi ces corps, on connaît les mousses syntactiques, composées de résine époxyde associée à des micro-billes de verre, également certaines mousses de polyuréthane. Tous ces corps présentent l'inconvénient plus ou moins prononcé de leur déformabilité en fonction de la pression du milieu aquatique d'où résulte une diminution de la poussée d'Archimède liée à la diminution de leur volume et cela en fonction de la profondeur d'immersion.

La présente invention vise à remédier aux inconvénients des moyens actuellement connus et propose une solution nouvelle pour l'allègement ou la mise en flottabilité de corps pesants immergés notamment déformables.

L'objectif de la présente invention est d'obtenir l'allègement d'un corps pesant immergé à une profondeur donnée au moyen d'un flotteur ayant une structure souple dans les trois dimensions et susceptible de subir des modifications de géométrie sans pour autant modifier son volume de façon significative.

Cet objectif est atteint par le procédé de fabrication d'un flotteur déformable selon l'invention, caractérisé parles opérations suivantes :
- on réalise au moins une structure tridimensionnelle déformable;
- on remplit les espaces existant entre les composants de ladite structure d'une pluralité de corps creux rigides, de forme ronde et remplis d'air;
- et on entoure ladite structure et lesdits corps creux par une peau de revêtement imperméable et souple capable de subir de forts allongements de manière à constituer un élément de flotteur parfaitement étanche et susceptible de constituer lui-même un flotteur ou entrer dans la composition dudit flotteur.

Selon un mode opératoire, selon lequel on utilise au moins une structure constituée par un tissage tridimensionnel, réalisé à partir de fibres synthétiques :
- on enduit au moins une des faces dudit tissage d'une couche de résine élastomère de manière à réaliser une peau de revêtement imperméable;
- on remplit, jusqu'à saturation, ledit tissage de micro-billes contenant de l'air, de telle sorte que les micro-billes occupent sensiblement la totalité du volume des espaces existant entre les fibres du tissage;
- et on enduit les autres faces du tissage d'une couche de ladite résine élastomère pour réaliser une enveloppe parfaitement étanche.

Selon un autre mode opératoire selon lequel on utilise au moins deux structures constituées chacune par un tissage tridimensionnel réalisé à partir de fibres synthétiques :
- on enduit la face supérieure d'un desdits tissages tridimensionnels d'une couche de résine élastomère de manière à réaliser une peau de revêtement imperméable;
- on enduit la face inférieure d'un autre tissage tridimensionnel d'une couche de ladite résine élastomère de manière à réaliser une peau de revêtement imperméable;
- on applique l'une contre l'autre lesdites faces desdits tissages exemptes de résine;
- on remplit lesdits tissages jusqu'à saturation de micro-billes remplies d'air, mises au contact les unes des autres, de telle sorte que les micro-billes occupent sensiblement la totalité du volume des espaces existant entre les fibres des tissages;
- et on enduit les autres faces d'une couche de résine élastomère pour réaliser une enveloppe parfaitement étanche.

Selon un autre mode opératoire. selon lequel on utilise au moins deux structures constituées chacune par un tissage tridimensionnel :
- on enduit la face supérieure d'un desdits tissages tridimensionnels d'une couche de résine élastomère, de manière à réaliser une peau de revêtement imperméable;

- on enduit la face inférieure d'un autre tissage tridimensionnel d'une couche de ladite résine élastomère de manière à réaliser une peau de revêtement imperméable;

- on remplit lesdits tissages jusqu'à saturation de micro-billes remplies d'air, mises au contact les unes des autres, de telle sorte que les micro-billes occupent sensiblement la totalité du volume des espaces existant entre les fibres des tissages;

- on place en regard l'une de l'autre lesdites faces exemptes de résine et on assemble lesdits tissages au moyen d'une couche de résine élastomère qui se trouve insérée entre lesdites faces;

- et on enduit les autres faces d'une couche de ladite résine élastomère pour réaliser une enveloppe parfaitement étanche.

Selon le procédé, on contrôle l'état d'incompressibilité desdits éléments du flotteur en exerçant une pression sur lesdits éléments de manière à obtenir, pour une profondeur donnée, un compactage qui confère un état de confinement stable des micro-billes ou desdits corps creux.

Selon un autre mode de réalisation, on superpose et on assemble entre eux par solidarisation des peaux de revêtement mises au contact l'une de l'autre, lesdits éléments de flotteur pour réaliser le flotteur dont le degré de flottabilité est fonction du nombre d'éléments qui le composent.

Selon un mode de réalisation, ledit flotteur se compose d'au moins une structure constituée par un tissage tridimensionnel réalisé à partir de fibres synthétiques et se caractérise par le fait qu'il se compose d'au moins un élément de flotteur comportant, outre ledit tissage et jusqu'à saturation, une pluralité de micro-billes remplies d'air, mises au contact les unes des autres et disposées librement dans les espaces existant entre les fibres du tissage et une peau de revêtement imperméable qui enveloppe, de façon étanche, ledit tissage et lesdites micro-billes.

Selon un mode préférentiel de réalisation, les micro-billes sont réalisées à base de silice et sont d'un diamètre compris entre 10 et 20 microns. La peau qui enveloppe le tissage et les micro-billes est réalisée à partir d'une résine élastomère.

Selon un mode de réalisation, ledit élément de flotteur comporte deux tissages tridimensionnels superposés et remplis à saturation de micro-billes, l'ensemble étant enveloppé par une peau de revêtement imperméable réalisée à partir de ladite résine élastomère pour obtenir une enveloppe parfaitement étanche.

Selon un autre mode de réalisation, ledit flotteur comporte deux tissages tridimensionnels superposés et remplis à saturation de micro-billes dont lesdits tissages sont assemblés l'un à l'autre au moyen d'une couche de résine élastomère, l'ensemble étant enveloppé par une peau de revêtement imperméable réalisée à partir de ladite résine pour obtenir une enveloppe parfaitement étanche.

Une caractéristique du flotteur selon l'invention est que les micro-billes ou lesdits volumes sont compactés pour leur conférer un état de confinement stable.

Selon un mode de réalisation, ledit flotteur se compose de plusieurs éléments de flotteurs superposés et assemblés entre eux par solidarisation des peaux de revêtement mises au contact l'une de l'autre pour réaliser un flotteur dont le degré de flottabilité est fonction du nombre d'éléments de flotteurs qui le composent.

Le résultat de l'invention est un flotteur déformable trouvant son application à l'allègement des corps pesants immergés et dont les composants de poids volumiques voisins sont contenus dans une enveloppe étanche capable de subir des modifications de géométrie sans pour autant modifier leur volume de façon conséquente.

Le support utilisé est un tissage en trois dimensions dont la masse volumique est de 200 Kg/m³ quand il est réalisé par exemple à partir de fibres de polyester.

Les micro-billes qui occupent les espaces existant entre lesdites fibres et dont le diamètre est par exemple compris entre 10 et 20 microns peuvent résister à des pressions allant jusqu'à 30 MPa. Leur masse volumique est de l'ordre de 350 Kg/m³.

La peau qui enveloppe le tissage tridimensionnel rempli jusqu'à saturation de micro-billes de verre est réalisé à partir d'une résine élastomère, dont la masse volumique est de l'ordre de 1400 Kg/m³, capable de subir des allongements pouvant atteindre jusqu'à 200% tout en conservant ses propriétés d'élasticité. De préférence, l'élastomère choisi est de la famille des buthyls ou silicones.

La masse volumique du flotteur déformable ainsi conçu est de l'ordre de 450 à 500 Kg/m³.

Du fait de sa composition, un tel flotteur est souple, le support constitué par ledit tissage tridimensionnel en fibres de polyester est thermoformable. Ces deux avantages offrent la possibilité de donner au flotteur toutes les formes souhaitées en fonction des besoins. Ainsi, dans son application aux câbles d'énergie sous-marin par exemple, le flotteur adopte la forme d'une bande qui est enroulée autour du câble et en fonction du diamètre extérieur compatible avec les moyens de surface, l'allègement de la partie immergée du câble, par exemple en cours de pose, peut varier en poids apparent de quelques KN jusqu'à un poids nul.

Dans cette application, la gaine d'allègement ainsi formée et, compte tenu des éléments qui la composent, constitue un isolant thermique.

Pour le refroidissement d'un câble sous-marin en service par exemple, il est possible de prévoir, entre le câble et la gaine d'allègement des canaux de circulation d'eau, le mouvement de l'eau se faisant par convection sous l'effet de la chaleur dégagée par le câble. En fonction de la chaleur émise, le débit sera plus ou moins important.

De tels canaux peuvent être obtenus par thermoformage en donnant à la bande un profil ondulé par exemple.

Toujours dans son application aux câbles sousmarins, une telle gaine peut constituer une armature flottante dans la mesure où on la renforce par de gros fils de polyamide.

Hormis cette application aux câbles électriques, toutes les applications qui imposent une souplesse et une adaptation du flotteur aux géométries du corps à alléger peuvent être envisagées.

D'autres avantages et les caractéristiques de l'invention ressortiront encore à la lecture de la description suivante donnée à titre d'exemple en référence au dessin annexé sur lequel :

- la figure 1 est une vue en perspective schématique d'un élément de flotteur selon l'invention, dans un mode d'exécution;

- la figure 2 est une vue en coupe transversale de l'élément de la figure 1;

- la figure 3 est une vue en coupe transversale d'un flotteur selon l'invention, composé de plusieurs éléments superposés et assemblés entre eux.

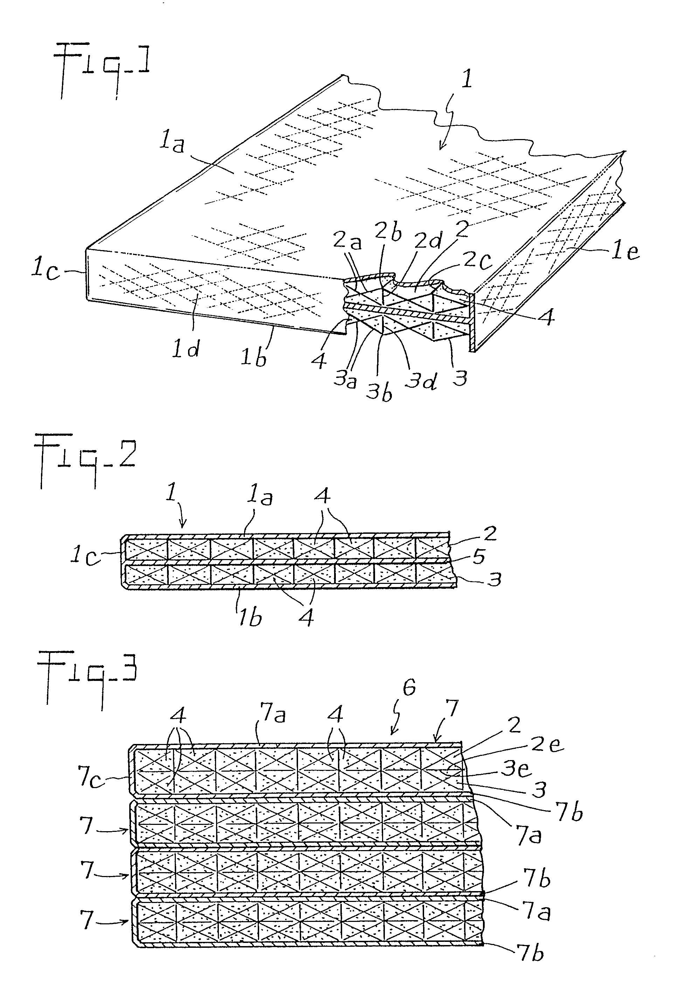

On se reporte d'abord à la figure 1 du dessin qui représente, de façon partielle, un élément de flotteur 1 dans un mode de réalisation.

En remontant à l'essence du procédé selon l'invention pour la mise en oeuvre d'un tel élément, on réalise au moins une structure tridimensionnelle déformable et on remplit les espaces existant entre les composants de ladite structure par une pluralité de corps creux rigides de forme ronde et remplis d'air. On entoure ensuite ladite structure et lesdits corps creux par une peau de revêtement imperméable et souple et capable de subir de forts allongements de l'ordre de 200%. Le produit obtenu par ce procédé est un élément de flotteur parfaitement étanche et susceptible d'entrer dans la composition d'un flotteur comprenant quatre éléments tel que représenté à la figure 3 ou encore de constituer lui-même un flotteur tel qu'illustré à la figure 1.

La structure est, de préférence, réalisée en une matière synthétique déformable tel que par exemple le polyester.

Les corps creux sont par exemple des billes ou des micro-billes de verre contenant de l'air ou tous autres objets similaires adoptant une forme générale ronde de telle sorte que lesdits corps puissent rouler les uns sur les autres lors de la déformation du flotteur.

La peau de revêtement imperméable, qui enveloppe de façon étanche ladite structure et lesdites billes ou similaire, est réalisée à partir d'une résine élastomère par exemple choisie dans la famille des buthyls ou silicones.

Dans un mode de réalisation d'un tel élément de flotteur 1, donné à titre d'exemple, on utilise deux structures 2/3 constituées par un tissage tridimensionnel réalisé à partir de fils synthétiques par exemple de polyester et comportant une trame 2a/3a formée de fils s'étendant de façon régulièrement sinueuse pour former des sommets 2b/3b venant sensiblement en regard les uns des autres et d'une chaîne 2c comportant des fils de même nature et s'étendant sensiblement perpendiculairement à la trame 2a/3a. Le tissage 2/3 comporte également un troisième fil 2d/3d qui rejoint les sommets 2b/3b des fils de trame.

De par sa conception, un tel tissage à trois dimensions tend à minimiser les déformations dans le cas d'efforts de traction et/ou de compression auxquels est soumis l'élément de flotteur.

La face supérieure du tissage 2 est enduite d'une couche de résine élastomère de manière à réaliser une peau de revêtement imperméable qui constitue la face supérieure la dudit élément.

La face inférieure du tissage 3 est enduite d'une couche de résine élastomère afin de réaliser une peau de revêtement imperméable qui constitue la face inférieure 1b de l'élément de flotteur 1.

On remplit ensuite lesdits tissages 2/3 jusqu'à saturation, de micro-billes de verre remplies d'air 4, de telle sorte que lesdites micro-billes sont disposées librement et occupent sensiblement la totalité du volume des espaces existant entre les fils de tissage 2/3. De préférence, le diamètre desdites micro-billes peut être compris entre 10 et 20 microns.

On place ensuite, en regard l'une de l'autre, les faces des tissages 2/3 exemptes de résine et on assemble lesdits tissages au moyen d'une couche de résine élastomère 5 qui s'étend ainsi sur la surface de l'élément du flotteur et sensiblement à mi-hauteur de celui-ci.

On enduit enfin les autres faces latérales 1c/1d/1e dudit élément 1 de résine pour former une peau de revêtement imperméable dans le but de réaliser une enveloppe parfaitement étanche.

L'élément ainsi obtenu peut adopter la forme d'une bande souple pouvant être enroulée autour d'un câble ou de tous autres éléments longilignes ou encore adopter la forme de plaques déformables superposables.

La figure 2 du dessin donne, en coupe, la composition de l'élément de la figure 1, lequel se compose de deux tissages à trois dimensions 2/3 tel que décrits ci-dessus et remplis à saturation de micro-billes de verre 4, lesquels tissages 2/3 sont superposés et assemblés l'un à l'autre au moyen d'une couche de résine élastomère 5, l'ensemble étant enveloppé par une peau de revêtement imperméable réalisée à partir de ladite résine élastomère pour obtenir une enveloppe 1a/1b/1c parfaitement étanche.

On se reporte enfin à la figure 3 du dessin qui représente, en coupe transversale, un flotteur selon l'invention 6 comportant plusieurs éléments de flotteurs 7 superposés et assemblés les uns aux autres.

Chacun desdits éléments de flotteurs 7 qui composent ledit flotteur et son procédé de fabrication est très analogue à ceux qui viennent d'être décrits en référence aux figures 1 et 2.

Selon un mode de fabrication d'un tel élément 7, on utilise par exemple deux structures constituées par un tissage tridimensionnel, identiques à celles référencées 2/3 aux figures 1 et 2.

La face supérieure du tissage 2 est ainsi enduite d'une couche de résine élastomère de manière à réaliser une peau de revêtement imperméable qui constitue la face supérieure 7a de l'élément de flotteur 7.

On enduit ensuite la face inférieure du tissage 3 d'une couche de résine élastomère de manière à réaliser une peau de revêtement imperméable qui constitue la face inférieure 7b dudit élément 7.

On applique l'une contre l'autre les faces 2e/3e exemptes de résine et on remplit les tissages 2/3 jusqu'à saturation, de micro-billes remplies d'air 4, de telle sorte que celles-ci occupent la totalité du volume des espaces existant entre les fils de tissage 2/3. On enduit enfin les faces latérales 7c ... d'une couche de résine élastomère afin de réaliser une enveloppe parfaitement étanche.

L'élément de flotteur obtenu par le procédé qui vient d'être décɪ. comporte ainsi deux tissages tridimensiⱶnels 2/3 superposés et mis au contact l'un de l'autre sans couche de séparation, lesquels tissages 2/3 sont remplis à saturation de micro-billes 4, mises au contact les unes des autres, et disposées librement dans les espaces desdits tissages, l'ensemble étant enveloppé par une peau de revêtement imperméable réalisée à partir de ladite résine élastomère en vue d'obtenir une enveloppe 7a/7b/7c parfaitement étanche.

Le flotteur 6, illustré à la figure 3, est composé de plusieurs éléments de flotteur 7 superposés, par exemple au nombre de quatre et assemblés entre eux par solidarisation des peaux de revêtement 7a/7b qui constituent les faces supérieure et inférieure desdits éléments. La liaison des éléments 7 entre eux est obtenue par exemple par collage au moyen d'une couche de résine insérée entre les faces 7a/7b ou par tout autre moyen connu de l'Homme de l'Art.

Le flotteur 6 ainsi obtenu est d'un degré de flottabilité qui est, bien entendu, fonction du nombre d'éléments de flotteurs 7 qui le composent.

L'état d'incompressibilité des composants 2/3/4 des éléments des flotteurs 1/7 est contrôlable à la fabrication en fonction de la valeur de chargement retenue, obtenu sous presse ou encore par laminage.

Après que lesdits composants 2/3/4 ont subi un cycle de chargement et pour une profondeur donnée, on considère qu'ils sont mis en condition pour résister aux pressions existant dans l'environnement aquatique et à cette profondeur.

Bien entendu et sans sortir du cadre de l'invention, un élément de flotteur peut n'être composé que d'une seule structure tridimensionnelle constituée par un tissage tel que référencé 2 ou 3 sur le dessin et rempli à saturation de micro-billes de verre 4 et entouré d'une peau de revêtement imperméable 1a...7a, pour constituer une enveloppe étanche. Un flotteur selon l'invention peut aussi être composé de plusieurs éléments selon cette conception et assemblés entre eux tel que cela a été exposé lors de la description de la figure 3.

**Revendications**

1. Procédé de fabrication d'un flotteur déformable destiné à l'allègement d'un corps pesant immergé, caractérisé par les opérations suivantes :
- on réalise au moins une structure tridimensionnelle déformable (2/3);
- on remplit les espaces existant entre les composants de ladite structure d'une pluralité de corps creux rigides (4) de forme ronde et remplis d'air;
- et on entoure ladite structure (2/3) et lesdits corps creux rigides (4) par une peau de revêtement (1a...1e), imperméable et souple et capable de subir de forts allongements de manière à constituer un élément de flotteur (1/7) parfaitement étanche et susceptible de constituer lui-même un flotteur ou d'entrer dans la composition dudit flotteur (6).

2. Procédé selon la revendication 1, mis en oeuvre à partir d'au moins une structure constituée par un tissage tridimensionnel (2/3) réalisé au moyen de fibres synthétiques (2a/2c/2d-3a/3c/3d), caractérisé par les opérations suivantes :
- on enduit au moins une face dudit tissage d'une couche de résine élastomère de manière à réaliser une peau de revêtement imperméable 1a;
- on remplit, jusqu'à saturation, ledit tissage (2/3) de micro-billes contenant de l'air (4), mises au contact les unes des autres, de telle sorte que les micro-billes occupent sensiblement la totalité du volume des espaces existant entre les fibres de tissage (2a/2c/2d-3a/3c/3d);
- et on enduit les autres faces du tissage d'une couche de ladite résine élastomère (1b...1e) pour réaliser une enveloppe parfaitement étanche.

3. Procédé selon la revendication 1, mis en oeuvre à partir d'au moins deux structures constituées chacune par un tissage tridimensionnel (2/3) réalisé au moyen de fibres synthétiques (2a/2c/2d-3a/3c/3d), caractérisé par les opérations suivantes :
- on enduit la face supérieure d'un desdits tissages tridimensionnels (2) d'une couche de résine élastomère de manière à réaliser une peau de revêtement (7a);
- on enduit la face inférieure d'un autre tissage tridimensionnel (3) d'une couche de ladite résine élastomère de manière à réaliser une peau de revêtement imperméable (7b);
- on applique l'une contre l'autre les faces 2e/3e desdits tissages exemptes de résine;
- on remplit lesdits tissages (2/3), jusqu'à saturation, de micro-billes remplies d'air (4), mises au contact les unes des autres, de telle sorte que les micro-billes occupent sensiblement la totalité du volume des espaces existant entre les fibres (2a/2c/2d-3a/3c/3d) des tissages;
- et on enduit les autres faces d'une couche de résine élastomère (7c...) pour réaliser une enveloppe parfaitement étanche.

4. Procédé selon la revendication 1, mis en oeuvre à partir d'au moins deux structures (2/3) constituées chacune par un tissage tridimensionnel réalisé au moyen de fibres synthétiques (2a/2c/2d-3a/3c/3d), caractérisé par les opérations suivantes :
- on enduit la face supérieure d'un desdits tissages tridimensionnels (2) d'une couche de résine élastomère, de manière à réaliser une peau de revêtement imperméable (1a);
- on enduit la face inférieure d'un autre tissage tridimensionnel (3) d'une couche de ladite résine élastomère de manière à réaliser une peau de revêtement imperméable (1b);
- on remplit lesdits tissages (2/3), jusqu'à saturation, de micro-billes remplies d'air (4), mises au contact les unes des autres, de telle sorte que les micro-billes occupent sensiblement la totalité du volume des espaces existant entre les fibres des tissages (2/3);
- on place en regard l'une de l'autre lesdites faces exemptes de résine et on assemble lesdits tissages (2/3) au moyen d'une couche de résine élastomère (5) qui se trouve insérée entre lesdites faces;
- et on enduit les autres faces d'une couche de ladite résine élastomère (1c...1e) pour réaliser une enveloppe parfaitement étanche.

5. Procédé selon l'une quelconque des revendications 1 à 4, caractérisé en ce que l'on contrôle l'état d'incompressibilité desdits éléments de flotteurs (1/7) en exerçant une pression sur lesdits éléments, de manière à obtenir, pour une profondeur donnée, un compactage qui confère un état de confinement stable des micro-billes ou desdits corps creux (4).

6. Procédé selon l'une quelconque des revendications 1 à 5, caractérisé en ce que l'on superpose et on assemble entre eux par solidarisation des peaux de revêtement (7a/7b) mises au contact l'une de l'autre, lesdits éléments de flotteurs (7) pour réaliser le flotteur (6), dont le degré de flottabilité est fonction du nombre d'éléments qui le composent.

7. Flotteur déformable destiné à l'allègement d'un corps pesant immergé, caractérisé en ce qu'il comporte en combinaison :
- une structure tridimensionnelle déformable (2/3);
- une pluralité de corps creux rigides de forme ronde et remplis d'air (4), disposés librement dans les espaces existant entre les composants de ladite structure (2/3);
- et une peau de revêtement imperméable et souple (1a...1e) capable de subir de forts allongements, laquelle peau enveloppe ladite structure (2/3) et lesdits corps creux rigides (4) de manière à constituer un élément de flotteur (1/7) parfaitement étanche et susceptible de constituer lui-même un flotteur ou d'entrer dans la composition dudit flotteur (6).

8. Flotteur selon la revendication 7, comprenant au moins une structure constituée par un tissage tridimensionnel (2/3) réalisé à partir de fibres synthétiques (2a/2c/2d-3a/3c/3d), caractérisé en ce qu'il se compose d'au moins un élément de flotteur (1/7) comportant, outre ledit tissage (2/3) et jusqu'à saturation, une pluralité de micro-billes remplies d'air (4), mises au contact les unes des autres et qui occupent sensiblement la totalite du volume des espaces existant entre les fibres du tissage et une peau de revêtement imperméable (1a...1e/7a...7c) qui enveloppe, de façon étanche, ledit tissage et lesdites micro-billes.

9. Flotteur selon la revendication 8, caractérisé en ce que ledit élément de flotteur (7) comporte deux tissages tridimensionnels (2/3) superposés et remplis à saturation de micro-billes, l'ensemble étant enveloppé par une peau de revêtement imperméable (7a...7c) réalisée à partir de ladite résine élastomère pour obtenir une enveloppe parfaitement étanche.

10. Flotteur selon l'une quelconque des revendications 8 et 9, caractérisé en ce que ledit élément de flotteur (1) comporte deux tissages tridimensionnels (2/3) superposés et remplis à saturation de micro-billes (4) dont lesdits tissages (2/3) sont assemblés l'un à l'autre au moyen d'une couche de résine élastomère (5), l'ensemble étant enveloppé par une peau de revêtement imperméable (1a...1e) réalisée à partir de ladite résine pour obtenir une enveloppe parfaitement étanche.

11. Flotteur selon l'une quelconque des revendications 8 à 10, caractérisé en ce que les micro-billes ou lesdits corps creux (4) sont compactés pour leur conférer un état de confinement stable.

12. Flotteur selon l'une quelconque des revendications 8 à 11, caractérisé en ce qu'il se compose de plusieurs éléments de flotteur (7) superposés et assemblés entre eux par solidarisation des peaux de revêtement (7a/7b) mises au contact l'une de l'autre pour réaliser un flotteur (6) dont le degré de flottabilité est fonction du nombre d'éléments de flotteurs (7) qui le composent.

Fig-1

Fig-2

Fig-3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | US-A-2 872 690 (NEISLER) <br> * Colonne 2, lignes 31-49; figures 1-5 * | 1,2,3,7 | B 63 B 3/13 <br> B 29 C 67/00 |
| Y | GB-A-2 167 017 (UTSUGI) <br> * Page 5, résumé * | 1,2,3,7 | |
| A | EP-A-0 154 521 (BADHAMS) <br> * Résumé; figures * | 1,7 | |
| A | FR-A-2 375 024 (NATOLI) <br> * Page 5; figures * | 1,7 | |
| A | DE-B-1 479 974 (KURTZ) <br> * Page 6; figures 5,7 * | 1,7 | |

DOMAINES TECHNIQUES RECHERCHES (Int. Cl.4)

B 63 B
B 29 C
C 08 J

Le présent rapport a été établi pour toutes les revendications

| Lieu de la recherche | Date d'achèvement de la recherche | Examinateur |
|---|---|---|
| LA HAYE | 09-06-1989 | VISENTIN, M. |

EPO FORM 1503 03.82 (P0402)